# EUROPEAN PATENT SPECIFICATION

(11) **EP 1 403 299 B1**
(45) Date of publication and mention of the grant of the patent: **17.05.2006**
(21) Application number: 03021135.3
(22) Date of filing: 22.09.2003
(51) Int. Cl.: C08G 18/20, C09J 175/06, C08G 18/42, C08G 18/76, C08G 18/79, C08G 18/12

(54) **Solvent-free moisture-curable hot melt urethane resin composition**
Lösungsmittelfreie, feuchtigkeitshärtende heissschmelzende Urethanharz-Zusammensetzung
Composition de résine urethane thermofusible sans solvant durcissable par l'humidité

(30) Priority: 27.09.2002 JP 2002282885
(43) Date of publication of application: 31.03.2004
(73) Proprietor: DAINIPPON INK AND CHEMICALS, INC., Itabashi-ku Tokyo (JP)
(72) Inventor: Minamida, Yukihiko, Sakai-shi Osaka (JP); Imanaka, Masayoshi, Izumi-shi Osaka (JP); Tanaka, Kojiro, Izumiotsu-shi Osaka (JP)
(74) Representative: Albrecht, Thomas

(56) References cited:
- WO-A-88/02636
- JP-A- 2001 262 113
- US-A- 5 550 191

## Description

### BACKGROUND OF THE INVENTION

### Field of the Invention

The present invention relates to a solvent-free moisture-curable hot melt urethane resin composition which is excellent in viscosity stability in a state of being heat-melted for a long time, and is also excellent in crosslinking reactivity with moisture (water).

### Description of Related Art

A reactive hot melt resin composition can be used as adhesives and coating materials after melting a resin having reactivity, which is solid at normal temperature, and has numerous advantages. Therefore, the reactive hot melt resin composition has recently become of great interest in the industrial world and has been put to practical use.

The reactive hot melt resin composition is free from a solvent and requires no drying process, and therefore, it has an advantage that the speed of application and lamination can be increased (for example, line speed of about 40 m/min) and can remarkably improve the productivity as compared with a solvent type adhesive and a water borne adhesive. Also, the reactive hot melt resin composition does not release the solvent in the air and requires no drying process, and therefore, the discharge amount of carbon dioxide can be decreased in view of energy saving, and it has attracted major interest as an environmentally friendly adhesive.

Among these reactive hot melt resin compositions, an isocyanate group-containing hot melt urethane prepolymer has attracted special interest and is utilized industrially, and it is used as a main component of various reactive hot melt resin compositions. The reactive hot melt resin composition containing the isocyanate group-containing hot melt urethane prepolymer as a main component causes the crosslinking reaction with moisture (water content) in the air or moisture contained in a substrate such as a wooden material, in which the reactive hot melt resin composition is used, thereby achieving a final adhesive strength.

The crosslinking reactivity, which strongly influences the time of the entire bonding process, is very important for the reactive hot melt resin composition. In view of productivity, the line speed in lamination of various substrates using the reactive hot melt resin composition remarkably increases recently and, for example, lamination is carried out at high speed of about 40 m/min. However, sufficient adhesive strength is not obtained soon after when laminated because it takes some time to finalize the crosslinking reaction of the isocyanate group with moisture. Therefore, the time depends on the crosslinking reactivity of the urethane prepolymer.

A conventional reactive hot melt resin composition is insufficient in crosslinking reactivity and the crosslinking reaction sometimes requires a long time. In an environment with low temperatures in the winter, for example, 4 to 5 days are required until the adhesive strength is obtained and, therefore, there is no sense in laminating at high speed. Also, there arises a problem such as storage space of the substrates after lamination. Therefore, the crosslinking reactivity is an important factor in the case of designing the reactive hot melt resin composition.

The isocyanate group-containing hot melt urethane prepolymer is obtained by reacting polyol and polyisocyanate as raw materials. As the polyisocyanate, aromatic polyisocyanates having low vapor pressure such as diphenylmethane diisocyanates are often used taking account of the crosslinking reactivity and safety.

Among these diphenylmethane diisocyanates, those having an isocyanate group at the para-position are useful because they have high reactivity and exhibit good crosslinking reactivity when used as the reactive hot melt resin. On the other hand, there is a problem in that they react with a urethane bond or a urea bond in the prepolymer itself even under the conditions in the absence of moisture to form an allophanate bond or a biuret bond because of high reactivity, and thus the viscosity in the system is liable to increase as a result of an increase in molecular weight.

The reactive hot melt resin is generally used after melting to a temperature within a range from 100 to 130°C. In the case in which the above-mentioned increase in molecular weight occurs upon melting, thickening occurs over time to cause performance defects such as change in coating amount and change in wettability to the substrate and, in the worst case, there happens a big problem during manufacturing, for example, gelation in a melting apparatus or a coating apparatus.

As a measure to solve the problem, there has been studied a method of suppressing an increase in molecular weight associated with the side reaction during melting of the reactive hot melt resin.

For example, there is a technique of using an aliphatic polyisocyanate having low reactivity as polyisocyanate as the raw material of the urethane prepolymer in order to prevent thickening over time of the reactive hot melt resin associated with the side reaction during melting. However, such an aliphatic polyisocyanate is insufficient in crosslinking reactivity when used as the reactive hot melt resin because of low reactivity at room temperature, and therefore, it is not suitable for practical use.

Specifically, substrates are usually laminated using a reactive hot melt resin composition and, after 2 to 3 hours, the resulting laminate is cut or drilled into a shape to be utilized. Since drastic heat generation arises during the cutting or drilling operation of the work, bonding defects such as peeling and lifting of the substrates occur during processing when the crosslinking reaction does not sufficiently proceed and thus the heat resistance is insufficient.

Furthermore, the aliphatic polyisocyanate was also insufficient in safety because it has higher vapor pressure than that of diphenylmethane diisocyanates.

There is also proposed a technique of using, tolylene diisocyanate or 2,4'-diphenylmethane diisocyanate having an isocyanate group with low reactivity among aromatic polyisocyanates; however, these polyisocyanates have relatively low crosslinking reactivity. In addition, the tolylene diisocyanate is insufficient in safety because of its high vapor pressure.

Also, an improvement in crosslinking reactivity at room temperature due to the addition of a crosslinking accelerator into a reactive hot melt resin has been studied. A conventionally used crosslinking accelerator, for example, amine catalyst such as diethylenetriamine, or metallic catalyst such as dibutyltin dilaurate improves the crosslinking reactivity at room temperature, but simultaneously accelerates the side reaction of the reactive hot melt resin during melting, and therefore, it is not suitable for practical use.

As a measure to solve the problem, United Status Patent No, 5,550,191 discloses that a polyurethane reactive hot melt adhesive comprising a urethane prepolymer and a morpholine ether-based crosslinking catalyst such as 2,2'-dimorpholino diethyl ether or di(2,6-dimethylmorpholinoethyl)ether is relatively effective for improvement of the thermal stability during melting and the crosslinking reaction rate. However, the morpholine ether-based crosslinking catalyst exerts insufficient effect of improving the crosslinking reaction rate, but may cause thickening during melting when the catalyst amount increases to improve the crosslinking reactivity to a suitable level for practical use.

Furthermore, for example, Japanese Unexamined Patent Application, First Publication No. 2001-262113 discloses that a moisture-curable adhesive composition comprising an isocyanate group-containing compound, an organophosphorus compound, and a morpholine compound is excellent in storage stability at normal temperature and thermal stability during melting, and also achieves rapid moisture curability and excellent adhesive strength.

However, the moisture-curable adhesive composition does not, exert a remarkable effect of improving the thermal stability of the organophosphorus compound and the effect of improving the thermal stability during melting is insufficient when the organophosphorus compound is added in a small amount. Therefore, in the case in which the amount of the organophosphorus compound is increased to improve the thermal stability during melting, the organophosphorus compound serves as a plasticizer, thereby causing delay of the achievement of satisfactory heat resistance and drastic deterioration of the heat resistance. Furthermore, the organophosphorus compound promotes the hydrolysis, thereby deteriorating the durability.

As described above, an improvement in crosslinking reactivity causes thickening over time associated with the side reaction during melting, and thus a conventional reactive hot melt resin composition does not satisfy the crosslinking reactivity and thermal stability.

### BRIEF SUMMARY OF THE INVENTION

An object of the present invention is to provide a solvent-free moisture-curable hot melt urethane resin composition which has high crosslinking reactivity at room temperature and is also excellent in thermal stability.

To achieve the above object, the present inventors have intensively researched and found that a composition prepared by adding a morpholine ether-based crosslinking catalyst, as a crosslinking accelerator, to an isocyanate group-containing hot melt urethane prepolymer has improved crosslinking reactivity at room temperature, but is inferior in thermal stability because drastic thickening or gelation occurs during melting, and that thickening during melting can be suppressed while maintaining excellent crosslinking reactivity at room temperature by further adding a specific sulfur atom-containing organic acid to the composition. Thus, the present invention has been completed.

The specific sulfur atom-containing organic acid, which constitutes the present invention, impairs the thermal stability and also exerts an adverse influence on the crosslinking reactivity at room temperature when it is added alone to an isocyanate group-containing hot melt urethane prepolymer without containing morpholine ether-based crosslinking catalyst, but exerts the above-mentioned excellent effects, surprisingly, when used in combination with the morpholine ether-based crosslinking catalyst.

The present invention provides a solvent-free moisture-curable hot melt urethane resin composition comprising an isocyanate group-containing hot melt urethane prepolymer (A), a morpholine ether-based crosslinking catalyst (B), and at least one sulfur atom-containing organic acid (C) selected from the group consisting of sulfonic acids and sulfinic acids as an essential component.

The present invention can provide a solvent-free moisture-curable hot melt urethane resin composition which has excellent crosslinking reactivity at room temperature and causes less thickening with a lapse of time associated with the side reaction during melt-heating, and is also excellent in thermal stability.

### DETAILED DESCRIPTION OF THE INVENTION

Matters to be required to work the present invention will be described below.

The solvent-free moisture-curable hot melt urethane resin composition in the present invention comprises an isocyanate group-containing hot melt urethane prepolymer (A) (hereinafter referred to as a urethane prepolymer (A)), a morpholine ether-based crosslinking catalyst (B), and a sulfur atom-containing organic acid (C) as essential components.

The urethane prepolymer (A) used in the present invention is a compound having an isocyanate group capable of reacting with moisture in the air or a substrate to be coated to form a crosslinked structure in the molecule, the compound being solid or viscous at normal temperature. The urethane prepolymer generally has a relatively low molecular weight and a person of ordinary skilled in the art also calls a urethane prepolymer having tens of thousands of the number-average molecular weight (Mn) a urethane prepolymer. In the present invention, the urethane prepolymer having tens of thousands of the number-average molecular weight (Mn) can also be used.

A number-average molecular weight (Mn) of the urethane prepolymer (A) is preferably within a range from 500 to 30,000, and more preferably from 1,000 to 10,000. When the number-average molecular weight of the urethane prepolymer is within the above range, a solvent-free moisture-curable hot melt urethane resin composition having excellent fluidity and processability can be obtained.

The urethane prepolymer (A) used in the present invention mainly has two characteristics: moisture-crosslinking reactivity (moisture curability) and hot-melting property.

The moisture-crosslinking reactivity of the urethane prepolymer (A) is originated from the crosslinking reaction which is initiated by the reaction between the isocyanate group of the urethane prepolymer and moisture (water) and is a property derived from the isocyanate group of the urethane prepolymer.

On the other hand, the hot-melting property of the urethane prepolymer (A) is property derived from the molecular structure of the urethane prepolymer to be selected, which enables the solid at normal temperature to melt with heating and to achieve an adhesive property after application in a molten state and further solidification with cooling.

The hot melt is a generic name of a substance or a property of the substance which is solid or viscous at normal temperature, but is melted to form a fluid or liquid when heated and, for example, a hot melt like ethylene-vinyl acetate hot melt is generally known. The hot melt is free from solvents and is solid or viscous at normal temperature, but is melted to be an applicable state when heated and exhibits a cohesive power again after cooling. Therefore, the hot melt is useful as a solvent-free adhesive and a coating material.

The hot-melting properties are closely related with a softening point and there is a tendency for handling to be further improved as the softening point of a commonly used urethane prepolymer decreases, while the adhesive strength increases when the softening point increases.

The softening point of the urethane prepolymer (A) used in the present invention is preferably within a range from 40 to 120°C. When the softening point of the urethane prepolymer is within the above range, a solvent-free moisture-curable hot melt urethane resin composition having good handling and excellent adhesive strength can be obtained. In the present invention, the softening point refers to a temperature at which the urethane prepolymer begins to flow and a cohesive power disappears when heated.

As the method of adjusting the softening point of the urethane prepolymer (A), for example, there can be employed (1) a method of adjusting a molecular weight of the urethane prepolymer, (2) a method of adjusting crystallinity of a polyalkylene chain of polyester polyol when using the polyester polyol as a raw material, (3) a method of adjusting by introducing polyol or polyisocyanate containing an aromatic ring, and (4) a method of adjusting the content of a urethane bond. These methods can be used alone or in combination.

In case of the method (1) of adjusting the softening point of the urethane prepolymer (A), the softening point tends to increase as the molecular weight of the urethane prepolymer increases. The molecular weight of the urethane prepolymer can be adjusted by, for example, a method of adjusting a molar ratio of polyisocyanate to polyol or a method of using high-molecular weight polyol. Methods are not limited.

In the case of the method (2) of adjusting the softening point of the urethane prepolymer (A), there is a tendency for the crystallinity of the resulting urethane prepolymer (A) to be more improved and the softening point to increase as the carbon atom number of the polyalkylene chain of the polyester polyol increases. Also the softening point tends to increase as the amount of the crystalline polyester polyol is increased.

In the case of the method (3) of adjusting the softening point of the urethane prepolymer (A), the softening point tends to increase as the content of the aromatic ring in the urethane prepolymer increases.

In the case of the method (4) of adjusting the softening point of the urethane prepolymer (A), the softening point tends to increase as the content of the urethane bond in the urethane prepolymer is increased.

The urethane prepolymer (A) can be prepared by reacting polyol with polyisocyanate in the state where an equivalent ratio of an isocyanate group of the polyisocyanate to a hydroxyl group of the polyol (hereinafter referred to as an equivalent ratio of the isocyanate group to the hydroxyl group) exceeds 1 (namely, the state where excess isocyanate groups exist).

The equivalent ratio of the isocyanate group to the hydroxyl group of the urethane prepolymer (A) is preferably within a range from 1.1 to 5.0, and preferably from 1.5 to 3.0. When the equivalent ratio is within the above range, the melt viscosity of the resulting solvent-free moisture-curable hot melt urethane resin composition is within a proper range and good processing suitability is obtained, and also the resulting solvent-free moisture-curable hot melt urethane resin composition is excellent in initial cohesive power and adhesive strength.

Examples of the polyol, which can be used in the preparation of the urethane prepolymer (A), include polyester-based polyol, polyether-based polyol, polycarbonate-based polyol, acrylic polyol, polyolefinic polyol, castor oil-based polyol, or a mixture or copolymer thereof.

Examples of the polyester-based polyol, which can be used in the preparation of the urethane prepolymer (A), include a condensate of polyhydric alcohol and polybasic acid. Examples of the polyhydric alcohol include ethylene glycol, 1,2-propylene glycol, 1,3-propylene glycol, 1,3-butanediol, 1,4-butanediol, 2,2-dimethyl-1,3-propanediol, 1,6-hexanediol, 3-methyl-1,5-pentanediol, 1,8-octanediol, diethylene glycol, triethylene glycol, dipropylene glycol, tripropylene glycol, cyclohexane-1,4-diol, cyclohexane-1,4-dimethanol, and ethylene oxide adducts and propylene oxide adducts of bisphenol A. These polyhydric alcohols can be used alone or in combination.

Examples of the polybasic acid, which can be used in the preparation of the polyester polyol, include succinic acid, maleic acid, adipic acid, glutaric acid, pimelic acid, suberic acid, azelaic acid, sebacic acid, dodecanedicarboxylic acid, phthalic acid, isophthalic acid, terephthalic acid, and hexahydroisophthalic acid. These polybasic acids can be used alone or in combination.

There can also be used a polymer prepared by ring-opening polymerization of γ-butyrolactone or ε-caprolactone using polyhydric alcohol as the initiator.

Examples of the polyether polyol, which can be used in the preparation of the urethane prepolymer (A), include polymers prepared by ring-opening polymerization of one or more kinds of ethylene oxide, propylene oxide, butylene oxide, and styrene oxide using the above-described polyhydric alcohol or polyester polyol as the initiator.

A polymer prepared by ring-opening polymerization of γ-butyrolactone or ε-caprolactone and polyether polyol can also be used.

Examples of the polycarbonate-based polyol, which can be used in the preparation of the urethane prepolymer (A), include a poly(alkylene carbonate)diol prepared by the condensation reaction of the above-described polyhydric alcohol and one or more kinds of diaryl carbonate, dialkyl carbonate, and alkylene carbonate.

Examples of the polyisocyanate, which can be used in the preparation of the urethane prepolymer (A), include aromatic polyisocyanates such as diphenylmethane diisocyanates, phenylene diisocyanate, tolylene diisocyanate, and naphtalene diisocyanate; and aliphatic polyisocyanates and alicyclic polyisocyanates, such as hexamethylene diisocyanate, lysine diisocyanate, cyclohexane diisocyanate, isophorone diisocyanate, dicyclohexylmethane diisocyanate, xylylene diisocyanate, and tetramethylxylylene diisocyanate.

As the urethane prepolymer (A) having an isocyanate group originated from diphenylmethane diisocyanates at a molecular end, diphenylmethane diisocyanates are particularly preferable among the above-described polyisocyanates because of rapid moisture-crosslinking reaction, low vapor pressure during melting, and low toxicity.

Examples of the diphenylmethane diisocyanates (hereinafter also referred to as MDI) include 4.4'-diphenylmethane diisocyanate, 2,4'-diphenylmethane diisocyanate, a mixture of 4,4'-diphenylmethane diisocyanate and 2,4'-diphenylmethane diisocyanate, carbodiimide-modified diphenylmethane diisocyanate, and crude diphenylmethane diisocyanate.

As a method of preparing the urethane prepolymer (A) used in the present invention, various conventionally known methods can be employed.

Examples thereof include a method of adding dropwise a predetermined amount of dehydrated polyol into polyisocyanate and reacting the mixture with heating until a hydroxyl group of the polyol is substantially reacted, and a method of adding polyisocyanate to a predetermined amount of dehydrated polyol and reacting the mixture with heating until a hydroxyl group of the polyol is substantially reacted. The reaction can be carried out in the absence of a solvent, but may be reacted in an organic solvent and then the solvent is removed. In the case in which the reaction is carried out in the organic solvent, the organic solvent is not specifically limited as long as it does not inhibit the reaction, and, for example, organic solvents such as ethyl acetate, n-butyl acetate, methyl ethyl ketone, and toluene can be used. In the case in which the reaction is carried out using the organic solvent, the organic solvent must be removed by a solvent removing method like vacuum heating during or after the completion of the reaction.

In the case of synthesizing the urethane prepolymer (A), additives such as urethanization reaction catalyst and stabilizer can be optionally used, as long as the desired viscosity stability during melting and moisture-crosslinking reactivity at room temperature of the present invention is deteriorated.

These additives such as urethanization reaction catalyst and stabilizer can be appropriately added in any stage of the reaction.

As the urethanization reaction catalyst, for example, there can be used nitrogen-containing compounds such as triethylamine, triethylenediamine, and N-methylmorpholine; organic acid metal salts such as potassium acetate, zinc stearate, and tin octylate; and organic metal compounds such as dibutyltin dilaurate.

As the stabilizer, for example, there can be used ultraviolet absorbers such as benzotriazole compounds, benzophenone compounds, phenyl salicylate compounds, and cyanoacrylate compounds; and antioxidants such as hindered phenol compounds and hindered amine compounds.

The morpholine ether-based crosslinking catalyst (B) used in the present invention will be described below. The morpholine ether-based crosslinking catalyst (B) contributes to the moisture-crosslinking reactivity at room temperature of the solvent-free moisture-curable hot melt urethane resin composition in the present invention.

As the morpholine ether-based crosslinking catalyst (B), which constitutes the present invention, for example, it is possible to use a compound represented by the following general formula (X): 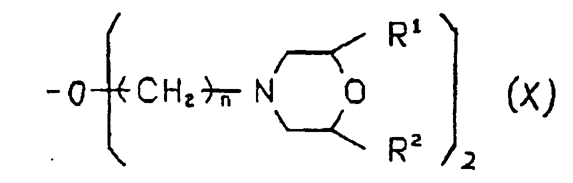 (wherein R¹ and R² represent hydrogen or an alkyl group, and n represents a positive integer).

In the solvent-free moisture-curable hot melt urethane resin composition of the present invention, the amount of the morpholine ether-based crosslinking catalyst (B) can be appropriately controlled according to the desired moisture-crosslinking reactivity, but is preferably from 0.05 to 5.0% by weight, and more preferably from 0.2 to 3.0% by weight, based on the weight of the urethane prepolymer (A). When the amount of the morpholine ether-based crosslinking catalyst is within the above range, it is possible to satisfy moisture-crosslinking reactivity at relatively low temperature such as at room temperature and excellent thermal stability.

As the morpholine ether-based crosslinking catalyst (B) used in the present invention, 2,2'-dimorpholino diethyl ether represented by the following structural formula (1) or di(2,6-dimethylmorpholinoethyl)ether represented by the following structural formula (2) is particularly preferable in view of excellent moisture-crosslinking reactivity and excellent thermal stability as well as availability.

2,2'-dimorpholino diethyl ether and di(2,6-dimethylmorpholinoethyl)ether may be used alone or in combination. When using them in combination, a mixing ratio thereof is not specifically limited.

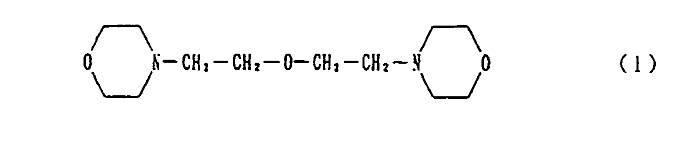

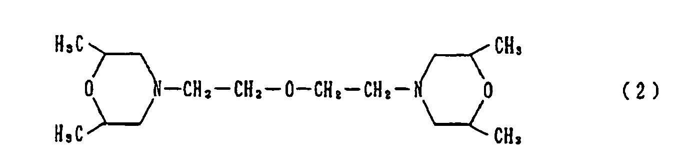

The sulfur atom-containing organic acid (C), which is a constituent of the present invention, will be described below.

The sulfur atom-containing organic acid (C) contributes to an improvement in thermal stability during melting of the solvent-free moisture-curable hot melt urethane resin composition in the present invention.

The sulfur atom-containing organic acid (C) used in the present invention is at least one sulfur atom-containing organic acid selected from the group consisting of sulfonic acids and sulfinic acids.

As the sulfonic acids, for example, there can be used aliphatic sulfonic acids such as methanesulfonic acid, ethanesulfonic acid, methanedisulfonic acid, 1,2-ethanedisulfonic acid, 2-hydroxy-1-ethanesulfonic acid, sulfoacetic acid, 2-amino-1-ethanesulfonic acid, and trifluoromethanesulfonic acid; and aromatic sulfonic acids such as benzenesulfonic acid, o-, m-, or p-toluenesulfonic acid, and other substituted benzenesulfonic acids.

As the sulfinic acids, ethanesulfinic acid can be used. Among these sulfur atom-containing organic acids, methanesulfonic acid and ethanesulfonic acid are preferable because of particularly excellent effect of improving the thermal stability during melting. These sulfur atom-containing organic acids may be used alone or in combination.

The sulfinic acid is also a precursor of sulfonic acid and can be converted into sulfonic acid by heating.

The amount of the sulfur atom-containing organic acid (C) in the solvent-free moisture-curable hot melt urethane resin composition of the present invention is preferably within a range from 0.005 to 3.0% by weight, and more preferably from 0.02 to 0.1 % by weight, based on the weight of the urethane prepolymer (A). When the sulfur atom-containing organic acid is used in the amount within the above range, a solvent-free moisture-curable hot melt urethane resin composition having thermal stability during melting can be obtained.

If necessary, the solvent-free moisture-curable hot melt urethane resin composition of the present invention can contain tackifiers, for example, rosin resins, rosin ester resins, hydrogenated rosin ester resins, terpene resins, terpenephenol resins, hydrogenated terpene resins, and petroleum resins such as C₅ aliphatic resin, C₉ aromatic resin, and a copolymer resin of C₅ and C₉ resins; plasticizers such as dibutyl phthalate, dioctyl phthalate, dicyclohexyl phthalate, diisooctyl phthalate, diisodecyl phthalate, dibenzyl phthalate, butylbenzyl phthalate, trioctyl phosphate, epoxy plasticizers, toluene-sulfoamide, chloroparaffin, adipate, and castor oil; stabilizers such as hindered phenol compounds, benzotriazole compounds, and hindered amine compounds; fillers such as silicic acid derivative such as silica, talc, metal powder, calcium carbonate, clay, and carbon black; additives such as dye, pigment, fluorescent whitening agent, silane coupling agent, wax, urethanization reaction catalyst, and foam stabilizer; and thermoplastic resins according to single or plural purposes, as long as the object of the present invention is not adversely affected.

The solvent-free moisture-curable hot melt urethane resin composition of the present invention is excellent in moisture-crosslinking reactivity at room temperature, and is also excellent in thermal stability because of less thickening over time during melting. Therefore, when the solvent-free moisture-curable hot melt urethane resin composition of the present invention is practically used by using an apparatus for coating in a heat-molten state, the solvent-free moisture-curable hot melt urethane resin composition can be used for various purposes such as adhesives, pressure-sensitive adhesives, coating materials, binders, sealers, and coating compositions because of excellent coatability and coating performances.

### EXAMPLES

The present invention will be described in detail by way of examples. In the following examples, parts and percentages are by weight unless otherwise specified. The properties, thermal stability and moisture-crosslinking reactivity at room temperature (creep resistance at high temperature were evaluated in place of the moisture-crosslinking reactivity) of the resin compositions of the examples and comparative examples were evaluated under the following conditions. The results are shown in Table 1 and Table 2.

### [Method for measurement of melt viscosity]

Using an ICI cone plate rotational viscometer (cone diameter: ϕ19.5 mm, cone angle: 2.0°), a melt viscosity (mPa·s) at 125°C of a solvent-free moisture-curable hot melt urethane resin compositions was measured.

### [Method for measurement of isocyanate group content (% by weight)]

Using a titration method, an isocyanate group content (% by weight) of a solvent-free moisture-curable hot melt urethane resin composition was measured.

### [Method for evaluation of thermal stability]

A solvent-free moisture-curable hot melt urethane resin composition was charged in a metal can having an inner volume of 200 ml and allowed to stand in an oven at 120°C in a sealed state for 18 hours and 36 hours. Then, it was visually observed whether gelation occurs or not. In the case in which no gelation occurred after standing, the melt viscosity (mPa·s) at 125°C was measured.

### [Method for evaluation of creep resistance at high temperature]

The creep resistance at high temperature was evaluated by the following procedure in place of the evaluation of the moisture-crosslinking reactivity at room temperature.

Using a specimen made by laminating an olefin decorative sheet and a middle density fiber (MDF) board via a solvent-free moisture-curable hot melt urethane resin composition, the creep resistance at high temperature was evaluated in the following manner.

A solvent-free moisture-curable hot melt urethane resin composition melted heat-melted on a hot plate having a surface temperature of 80°C was applied in a thickness of 40 µm on a 50 µm thick olefin decorative sheet and a MDF board was laminated on the coated surface and, after roll pressing at a linear pressure of 10 kg/cm, the resulting laminate was cut into a width of 25 mm to prepare for a bonded specimen.

A heat-resistant creep test was carried out by allowing specimens, which were allowed to stand for 1, 2, 3, or 4 hours immediately after production at room temperature (23°C, relative humidity: 65%), to stand in an oven at 60°C for 1 hour while perpendicularly suspending a load (500 g/25 mm) at one end of the olefin decorative sheet in a 90°C angle peeling direction. Then, a creep distance (mm) from the initial suspending location was measured over time. Specimens which had the creep distance of no more than 5 mm were rated "good".

Since the initial creep properties at 60°C are improved due to proceeding of the crosslinking reaction at room temperature (23°C, relative humidity: 65%), the initial creep properties were evaluated in place of the moisture-crosslinking reactivity at room temperature.

### Example 1

In a 1 liter four-necked flask, 500 parts of polyester polyol having a number-average molecular weight of 3000 obtained by reacting adipic acid with 1,6-hexanediol, 250 parts of polyester polyol having a number-average molecular weight of 1000 obtained by reacting neopentyl glycol with terephthalic acid and 250 parts of polyester polyol having a number-average molecular weight of 3500 obtained by reacting sebacic acid with 1,6-hexanediol were heated to 120°C under reduced pressure and then dehydrated until the water content was reduced to 0.05%.

After cooling to 70°C, 207 parts of 4,4'-diphenylmethane diisocyanate was added and the mixture was heated to 90°C and was reacted for 3 hours while being maintained at 90°C until the isocyanate group content becames constant to obtain a urethane prepolymer.

After the completion of the reaction, 4.8 parts of 2,2'-dimorpholino diethyl ether (trade name: "U-CAT 2041", manufactured by SAN-APRO LTD.) and 0.5 parts of methanesulfonic acid were added and stirred uniformly to obtain a solvent-free moisture-curable hot melt urethane resin composition of the present invention. Properties of the resulting solvent-free moisture-curable hot melt urethane resin composition are shown in Table 1. The melt viscosity as measured at 125°C using an ICI cone plate rotational viscometer was 11000 mPa·s and the isocyanate group content was 2.1 % by weight. Examples 2 to 5

According to the formulation shown in Table 1, a urethane prepolymer was synthesized by the same operation as in Example 1. After the completion of the reaction, additives shown in Table 1 were added in the amount described in the same table. Properties of the resulting solvent-free moisture-curable hot melt urethane resin compositions of the present invention are shown in Table 1.

In Table 1 and Table 2, "ISONATE 143LJ^{™}" [manufactured by Mitsubishi Chemical Corporation] is carbodiimide-modified diphenylmethane diisocyanate.

### Comparative Example 1

According to the same formulation as in Example 1, in a 1 liter four-necked flask. 500 parts of polyester polyol having a number-average molecular weight of 3000 obtained by reacting adipic acid with 1,6-hexanediol, 250 parts of polyester polyol having a number-average molecular weight of 1000 obtained by reacting neopentyl glycol with terephthalic acid and 250 parts of polyester polyol having number-average molecular weight of 3500 obtained by reacting sebacic acid with 1,6-hexanediol were heated to 120°C under reduced pressure and then dehydrated until the water content was reduced to 0.05%.

After cooling to 70°C, 240 parts of "ISONATE 143LJ^{™}" [carbodiimide-modified diphenylmethane diisocyanate, manufactured by Mitsubishi Chemical Corporation] was added and the mixture was heated to 90°C and was reacted for 3 hours while being maintained at 90°C until the isocyanate group content becames constant to obtain a urethane prepolymer.

After the completion of the reaction, 5.0 parts of 2,2'-dimorpholino diethyl ether (trade name: "U-CAT 2041 ", manufactured by SAN-APRO LTD.) was added and stirred uniformly to obtain a solvent-free moisture-curable hot melt urethane resin composition. The melt viscosity as measured at 125°C using an ICI cone plate rotational viscometer was 14000 mPa·s and the isocyanate group content was 2.1 % by weight.

### Comparative Example 2

An isocyanate group-containing urethane prepolymer was obtained by the same operation as in Comparative Example 1. After the completion of the reaction, 0.5 parts of methanesulfonic acid was added and stirred uniformly to obtain a solvent-free moisture-curable hot melt urethane resin composition. The melt viscosity as measured at 125°C using an ICI cone plate rotational viscometer was 15000 mPa·s and the isocyanate group content was 2.1 % by weight.

### Comparative Example 3

An isocyanate group-containing urethane prepolymer was obtained by the same operation as in Comparative Example 1. After the completion of the reaction, 0.6 parts of 89% phosphoric acid and 5.0 parts of 2,2' -dimorpholino diethyl ether ("U-CAT 2041", manufactured by SAN-APRO LTD.) were added and stirred uniformly to obtain a solvent-free moisture-curable hot melt urethane resin composition. The melt viscosity as measured at 125°C using an ICI cone plate rotational viscometer was 13000 mPa·s and the isocyanate group content was 2.1% by weight.

**Table 1**

| | | | | | |
|---|---|---|---|---|---|
| Composition of prepolymer (Parts) | Example 1 | Example 2 | Example 3 | Example 4 | Example 5 |
| 1.6-hexanediol adipate diol; equivalent weight of OH group = 1500 | 500 | 500 | 500 | 500 | 500 |
| Neopentyl glycol terephthalate diol; equivalent weight of OH group = 500 | 250 | 250 | 250 | 250 | 250 |
| 1,6-hexanediol sebacate; equivalent weight of OH group = 1750 | 250 | 250 | 250 | 250 | 250 |
| Isonate 143LJ | | 240 | 240 | 240 | 240 |
| 4,4'diphenylmethane diisocyanate | 207 | | | | |
| Methanesulfonic acid | 0.5 | 1.2 | | 5.0 | |
| Ethanesulfonic acid | | | 0.5 | | |
| p-toluenesulfonic acid | | | | | 1.2 |
| U-CAT2041 | 4.8 | 9.9 | 2.5 | 18.6 | 1.9 |
| Melt viscosity (mPa·s, 125°C) | 11000 | 10000 | 12000 | 13000 | 11000 |
| Isocyanate group content (% by weight) | 2.1 | 2.2 | 2.1 | 2.1 | 2.0 |
| Thermal stability Melt viscosity (mPa·s, 125°C) | | | | | |
| initial | 11000 | 12000 | 11000 | 12000 | 11000 |
| after 18 hours | 17000 | 22000 | 14000 | 25000 | 24000 |
| after 36 hours | 27000 | 35000 | 23000 | 55000 | 50000 |
| Creep resistance at 60°C Immediately after production of specimen | Fell off | Fell off | Fell off | 7 mm | Fell off |
| 1 hour after standing at room temperature | 15 mm | 9 mm | Fell off | Good | Fell off |
| 2 hours after standing at room temperature | Good | Good | 28 mm | Good | Fell off |
| 3 hours after standing at room temperature | Good | Good | Good | Good | Good |
| 4 hours after standing at room temperature | Good | Good | Good | Good | Good |

**Table 2**

| | | | |
|---|---|---|---|
| Composition of prepolymer (Parts by weight) | Comparative Example 1 | Comparative Example 2 | Comparative Example 3 |
| 1,6-hexanediol adipate diol; equivalent weight of OH group=1500 | 500 | 500 | 500 |
| Neopentyl glycol terephthalate diol; equivalent weight of OH group=500 | 250 | 250 | 250 |
| 1,6-hexanediol sebacate; equivalent weight of OH group=1750 | 250 | 250 | 250 |
| Isonate 143LJ (carbodiimide-modified MDI, manufactured by Mitsubishi Chemical Corporation) | 240 | 240 | 240 |
| Methanesulfonic acid | | 0.5 | |
| 89% phosphoric acid | | | 0.6 |
| U-CAT2041 | 5.0 | | 5.0 |
| Melt viscosity (mPa·s, 125°C) | 14000 | 15000 | 13000 |
| Isocyanate group content (% by weight) | 2.1 | 2.1 | 2.1 |
| Thermal stability Melt viscosity (mPa·s, 125°C) | | | |
| initial | 12000 | 13000 | 15000 |
| after 18 hours | 22000 | 29000 | 30000 |
| after 36 hours | Gelled | Gelled | Gelled |
| Creep resistance at 60°C Immediately after production of specimen | Fell off | Fell off | Fell off |
| 1 hour after standing at room temperature | 20 mm | Fell off | 10 mm |
| 2 hours after standing at room temperature | Good | Fell off | Good |
| 3 hours after standing at room temperature | Good | Fell off | Good |
| 4 hours after standing at room temperature | Good | Fell off | Good |

## Claims

1. A solvent-free moisture-curable hot melt urethane resin composition comprising an isocyanate group-containing hot melt urethane prepolymer (A), a morpholine ether-based crosslinking catalyst (B), and at least one sulfur atom-containing organic acid (C) selected from the group consisting of sulfonic acids and sulfinic acids as essential components.

2. The solvent-free moisture-curable hot melt urethane resin composition according to claim 1, wherein the isocyanate group-containing hot melt urethane prepolymer (A) is a urethane prepolymer having an isocyanate group originated from diphenylmethane diisocyanates at a molecular end.

3. The solvent-free moisture-curable hot melt urethane resin composition according to claim 1, wherein the morpholine ether-based crosslinking catalyst (B) comprises 2,2'-dimorpholino diethyl ether and/or di(2,6-dimethylmorpholinoethyl)ether.

4. The solvent-free moisture-curable hot melt urethane resin composition according to claim 1, wherein the sulfur atom-containing organic acid (C) comprises methanesulfonic acid and/or ethanesulfonic acid.

## Patentansprüche

1. Lösungsmittelfreie, feuchtigkeitshärtbare, heißschmelzende Urethanharzzusammensetzung, die ein Isocyanatgruppenenthaltendes heißschmelzendes Urethanpräpolymer (A), einen Vernetzungskatalysator (B) auf Morpholinetherbasis und mindestens eine Schwefelatom-enthaltende organische Säure (C), ausgewählt aus der Gruppe, bestehend aus Sulfonsäuren und Sulfinsäuren, als essentielle Komponenten umfasst.

2. Lösungsmittelfreie, feuchtigkeitshärtbare heißschmelzende Urethanharzzusammensetzung nach Anspruch 1, wobei das Isocyanatgruppen-enthaltende heißschmelzende Präpolymer (A) ein Urethanpräpolymer ist, das an einem Molekülende eine Isocyanatgruppe aufweist, die aus Diphenylmethandiisocyanaten entstanden ist.

3. Lösungsmittelfreie, feuchtigkeitshärtbare, heiß schmelzende Polyurethanharzzusammensetzung nach Anspruch 1, wobei der Vernetzungskatalysator auf Morpholinether-Basis (B) 2,2'-Dimorpholinodiethylether und/oder Di(2,6-Dimethylmorpholinoethyl)ether umfasst.

4. Lösungsmittelfreie, feuchtigkeitshärtbare, heiß schmelzende Urethanharzzusammensetzung nach Anspruch 1, wobei die Schwefelatom-enthaltende organische Säure (C) Methansulfonsäure und/oder Ethansulfonsäure umfasst.

## Revendications

1. Composition de résine uréthane thermofusible, sans solvant, pouvant être durcie par l'humidité, comprenant un prépolymère uréthane (A) thermofusible contenant un groupe isocyanate, un catalyseur de réticulation (B) à base de morpholine éther et au moins un acide organique (C) contenant un atome de soufre choisi dans le groupe consistant en acides sulfoniques et acides sulfiniques en tant que composants essentiels.

2. Composition de résine uréthane thermofusible, sans solvant, pouvant être durcie par l'humidité, selon la revendication 1, dans laquelle le prépolymère uréthane (A) thermofusible contenant un groupe isocyanate est un prépolymère uréthane ayant un groupe isocyanate provenant de diphénylméthane diisocyanates à une extrémité moléculaire.

3. Composition de résine uréthane thermofusible, sans solvant, pouvant être durcie par l'humidité, selon la revendication 1, dans laquelle le catalyseur de réticulation (B) à base de morpholine éther comprend le 2,2'-dimorpholino diéthyl éther et/ou le di(2,6-diméthylmorpholinoéthyl)éther.

4. Composition de résine uréthane thermofusible, sans solvant, pouvant être durcie par l'humidité, selon la revendication 1, dans laquelle l'acide organique (C) contenant un atome de soufre comprend l'acide méthane sulfonique et/ou l'acide éthane sulfonique.
